(19) **Europäisches Patentamt**
**European Patent Office**
**Office européen des brevets**

(11) **EP 1 485 908 B1**

(12) **EUROPEAN PATENT SPECIFICATION**

(45) Date of publication and mention
of the grant of the patent:
**05.09.2007 Bulletin 2007/36**

(51) Int Cl.:
**G10L 15/18** (2006.01)

(21) Application number: **03704899.8**

(22) Date of filing: **03.03.2003**

(86) International application number:
**PCT/IB2003/000834**

(87) International publication number:
**WO 2003/075260 (12.09.2003 Gazette 2003/37)**

(54) **METHOD OF OPERATING A SPEECH DIALOGUE SYSTEM**

VERFAHREN ZUM BETRIEB EINES SPRACHDIALOGSYSTEMS

PROCEDE POUR FAIRE FONCTIONNER UN SYSTEME DE DIALOGUE VOCAL

(84) Designated Contracting States:
**AT BE BG CH CY CZ DE DK EE ES FI FR GB GR HU IE IT LI LU MC NL PT RO SE SI SK TR**

(30) Priority: **07.03.2002 DE 10209928**

(43) Date of publication of application:
**15.12.2004 Bulletin 2004/51**

(73) Proprietors:
• **Philips Intellectual Property & Standards GmbH 20099 Hamburg (DE)**
Designated Contracting States:
**DE**
• **Koninklijke Philips Electronics N.V. 5621 BA Eindhoven (NL)**
Designated Contracting States:
**AT BE BG CH CY CZ DK EE ES FI FR GB GR HU IE IT LI LU MC NL PT RO SE SI SK TR**

(72) Inventor: **JOUBLIN, Frank**
**Weisshausstr. 2,**
**52066 Aachen (DE)**

(74) Representative: **Meyer, Michael Josef**
**Philips Intellectual Property & Standards GmbH**
**Postfach 50 04 42**
**52088 Aachen (DE)**

(56) References cited:
**EP-A- 0 907 130**

• **PATENT ABSTRACTS OF JAPAN vol. 2000, no. 26, 1 July 2002 (2002-07-01) & JP 2001 249685 A (ALPINE ELECTRONICS INC), 14 September 2001 (2001-09-14)**
• **SOUVIGNIER B ET AL: "The thoughtful elephant: strategies for spoken dialog systems" IEEE TRANSACTIONS ON SPEECH AND AUDIO PROCESSING, IEEE INC. NEW YORK, US, vol. 8, no. 1, January 2000 (2000-01), pages 51-62, XP002214774 ISSN: 1063-6676**

**Description**

The invention relates to a method of operating a speech dialogue system which system communicates with a user while use is made of a speech recognition device and a speech output device, various services being available to the user in the speech dialogue system or via the speech dialogue system and being selectable by the user in a dialogue held with the speech dialogue system, For controlling the dialogue for the selection of a service by the user, a database is used having a hierarchical data structure, and a plurality of nodes and a plurality of paths for interconnecting the nodes and for connecting nodes to service objects which are arranged at one end of each path in the data structure. The service objects then represent the services that are available and the nodes represent respective categories in which again other categories and/or services are classified which are represented by the further nodes or service objects arranged in the hierarchical data structure on a level below the respective node. In addition, the invention relates to a respective automatic speech dialogue system and a computer program with program coding means for executing the method.

Speech dialogue systems which communicate with a user while use is made of a speech recognition and speech output device have been known long since. They are so-called speech-controlled, automatic systems which are often referred to as speech applications. In the case where the speech dialogue system for the user is a means with which he is successful in accessing various services, a so-called voice portal is referred to. The speech dialogue system can have special terminals which the user is to operate to be able to communicate with the speech dialogue system such as, for example, a stationary information system at an airport or the like. Such speech dialogue systems, however, often have the connection to a public communications network so that the speech dialogue systems can be utilized, for example, by means of a normal telephone, a mobile radio device or a PC with a telephone function etc- An example for these speech dialogue systems are automatic telephone answering machines and information systems as they have meanwhile been used for example by several larger firms, organizations and offices to supply the desired information in the fastest and most comfortable way to a caller or connect him to a place that deals with the special desires of the caller.

**One such dialog system is described in** EP 0 907 130 A2**, wherein a number of possible telephone-related services are available to the user, and, by interpreting the user's spoken input, one of these services can be identified as the service most likely requested by the user.**

Further examples for this are the automatic telephone inquiry service which has already been used by several telephone companies, an automatic timetable or flight schedule information service or an information service with information about general events such as cinema and theater programs for a certain region. Several of the speech dialogue systems offer in addition to their pure information offer for the user to be kept ready or to be searched for and to be transmitted to the user if need be, also additional services such as, for example, a reservation service for seats on the train or airplane or hotel rooms, a payment service or a goods ordering service.

The user can then - for example by means of a dialogue switching (also called call transfer) also be switched to an external service to i.e. not belonging to the speech dialogue system or to a person. The connotation of "service" within the context of this document expressly comprises not only one complex service such as an information service, a switching device, a reservation service etc., but also only a single piece of information may be meant here which is issued to the user as a service rendered to the user within the speech dialogue system, for example, the issuance of a requested telephone number or the playing back of a tape with tips about events. In principle, similarly to for example the Internet, the user may consequently be offered any services via such a speech dialogue system. In a speech dialogue system there is then the advantage that the user only needs to have a normal telephone or a mobile radio device to make use of the services.

For the user to select a certain service of the speech dialogue system, in practice the method in which the individual services are arranged in a hierarchical decision tree-like data structure is customarily executed nowadays. The dialogue between the user and the speech dialogue system then commences at a starting point at the top of the tree structure and goes on along a path or branch respectively via a plurality of nodes which represent each a certain category of services, until the end of a path is reached at which a service object is found which represents the respective service. The idea of service object in the sense of this document is then to be understood as an arbitrary data object, a software module or the like, which represents the service itself and/or contains information about the service. This may be, for example, information about the form in which the service is to be called, an address of the service or of the respective software module or information for carrying out a call transfer or the like.

The nodes that represent the respective categories are found at various levels, while the nodes on a higher level represent categories in which are arranged the categories which belong to the nodes situated in the levels below and thus form the so-called sub-categories with respect to the category situated above them.

A graphic example for this is a speech dialogue system that offers various information services, inter alia for example a weather report and tips of events. In this example a subdivision could be made seen from the central node into the "weather" and "event tips". Under these categories there are then further categories, for example, under the category "weather" a category "current holiday weather" and a category "weather forecast" and under the category "event tips" the categories "cinema", "theater" and "performances" etc. Among these individual categories there are then further categories such as, for example, under the category "holiday weather" die individual regions for which the weather can be queried or under the category "theater" the individual theaters of a town. The user can then select a service in the dialogue in that, commencing at the starting point, he is first offered the categories of the upper level and is requested to select a category. Then, for example by a speech output of the system (also called prompt in the following) this may happen as follows: "If you are interested in event tips please say 'events', if you are interested in the weather report please say 'weather'". Depending on the user's answer a new prompt is then generated by the dialogue system, for example, after selection of the weather report the prompt" "If you wish to have the current weather report please say 'holiday', if you would like to have the weather report for the coming days please say 'weather report'" etc.

It will be obvious that with enhancing complexity of speech dialogue systems and enhancing a number of services in the speech dialogue system the tree structure becomes ever more complicated and ever more levels and thus also ever more nodes are to be added for the branching of the individual paths. In order to get to a certain service the user is then first to run through the whole data structure from start to end of the respective path and answer a multitude of questions of the dialogue system. This procedure accordingly costs much time, is tedious and uncomfortable for the user. In addition, a once determined rigid division into categories can inevitably not intuitively be operated by each individual user so that the user may easily make erroneous decisions at a node. The user is then led to a wrong service and is to start with the whole dialogue again. If the complexity of the whole system is too large, this will lead to the fact that owing to these troubles the speech dialogue system is no longer made use of by the users.

It is an object of the present invention to provide an improved method of operating a speech dialogue system of the type defined in the opening paragraph and provide a respective speech dialogue system that makes it possible for the user to find the desired service at any time in a fast and simple manner.

This object is achieved by a method of the type defined in the opening paragraph in which a plurality of different paths within the data structure leads at least to part of the service objects and/or nodes and in which to each node and each service object one or more keywords are assigned. According to the invention search words are extracted from the spoken entry of the user and, on the basis of the search words, a number of candidate nodes and/or candidate service objects are sought whose assigned keywords match the search words according to a predefined acceptance criterion. Then a search is made in various search steps until after the search step the number of candidate nodes and/or candidate service objects found is situated above a predefined minimum number and below a predefined maximum number. The speech output device then produces a speech output menu to announce to the user the categories and/or services represented by the candidate nodes and/or candidate service objects found for the user to select a certain category or a certain service.

With respect to the device the object is achieved by an automatic speech dialogue system comprising a speech recognition device and a speech output device for communication with the user as well as comprising a plurality of services that can be selected by the user in the speech dialogue system and/or comprising means for transferring the user via the speech dialogue system to services that can be selected by the user, while the speech dialogue system comprises a dialogue control unit for controlling the dialogue for the selection of a service by the user and a database having a respective hierarchical data structure mentioned above having a plurality of nodes and a plurality of paths to interconnect the nodes and to connect the nodes to service objects, which service objects are arranged at a respective end of a path in the data structure. The service objects then represent the services which are available and the nodes represent the respective categories into which again other categories and/or services are classified which are represented by nodes or service objects arranged on a level below the respective node in the hierarchical data structure. According to the invention at least part of the service objects and/or nodes in the data structure has a plurality of different paths leading thereto. Furthermore, one or more keywords are assigned to each node and each service object of the database. Further the speech dialogue system according to the invention has an analysis unit for extracting search words from a spoken entry received from the user and is to include a search unit for searching on the basis of the search words for a number of candidate nodes and/or candidate service objects in the database whose assigned keywords match the search words according to a predefined acceptance criterion, the search unit being structured so that it carries out a search in various search steps until after a search step the number of candidate nodes and/or candidate service objects found is situated above a predefined minimum number and below a predefined maximum number. Finally, the speech dialogue system according to the invention needs to have a prompt generation unit for generating after a successful search step a speech output menu to announce to the user the categories and/or services represented by the candidate nodes and/or candidate service objects found for him to select a certain category or a certain service by means of the speech output device.

As a result of the assignment of keywords to each node and each service object - or to the individual categories and services respectively - and a search for matching nodes and/or service objects based on the search words extracted from the user's spoken entry, which nodes and service objects have these search words as keywords, the dialogue with the user can be established in a relatively natural manner. The user, when searching for the respective service, need not classify according to the predefined categories to reach a destination, but he can use formulations which in his opinion describe the service best. With the keywords it is therefore preferably the name of the service or category, respectively, itself as well as additional keywords such as particularly equivalent descriptions of the service or category or words that the users intuitively associate with this service or the category. This procedure corresponds to so-called shortcuts in conventional systems with the discrepancy that they need not be established explicitly and later on be looked after at much cost, but have already been 'built in' in the method. As a result of the open structure in the way that only one path along certain defined nodes leads to the service objects, but that the data structure is built up in the form of a multiple tree structure where different nodes may lead to the same service object along different paths, the user has the possibility to reach the same service object from various nodes. This creates the possibility of laying down various ordering criteria for one service object, which criteria make easy access to the services possible with different information and knowledge available.

Since the keywords need to match the search words only up to a certain predefined acceptance criterion, it is also sufficient for the user not mentioning all the keywords of a category or of a service literally as search words in his speech output, but only that there is a certain overlap between search words and keywords. With a suitable choice of the acceptance criterion it may thus be provided that, on the one hand, not too many services or categories are found, but on the other hand no categories or services are rejected which could lead to the service desired by the user or which is even the desired service itself, which keywords however have only a partial overlap with the search words as a result of a poor spoken entry of the user. The acceptance criterion is thus to be chosen to be not too limited.

For the search for the nodes and service objects in the data structure by means of search words, for example a software module from a customary Internet search engine may be used, which evaluates the nodes and/or service objects found - called hits in the following - by a proportional hit rate which indicates in how far there is an overlap between search words and keywords. Such search modules are sufficiently known to the expert and for example also available via the products "FindIt" and "SpeechFinder" of Philips Speech Processing. Only the data interface of the search modules needs to be adapted to the speech dialogue system, or the other way around. Then a 60% hit rate may be assumed to be the acceptance criterion.

A premature and erroneous rejection of possibly correct i.e. fitting categories or services is avoided because - in so far as a certain number of candidate nodes i.e. possibly fitting categories and/or candidate service objects i.e. possibly fitting services are found - all the services and/or categories are offered to the user preferably in the form of a graded list. This takes place in a speech output menu which is generated by a prompt generation unit i.e. user-friendly clarifying questions or user-oriented menus are created automatically in dependence on the previous spoken entries and the search process in order to help the user in the dialogue to find the desired information or reach the desired service. By subdividing the search into various search steps which are continued until after a search step the number of determined candidate nodes and/or candidate service objects is situated between a predefined minimum number and a predefined maximum number. It is ensured, on the other hand, that the user is not offered too long lists of categories or services in a menu of the dialogue. The maximum number should accordingly be selected such that for the user it is an acoustically easily graspable and noticeable number of categories or services so that, after the termination of the menu output, he can still think of all the services offered and can accordingly select one of the services or categories.

The maximum number should preferably be set to five so that four different categories and/or services at the most can be offered at once.

A possibility of implementing this consists of the fact that the acceptance criterion is varied, first being searched with, for example, a very large acceptance criterion and then step by step, if too many candidate nodes and/or candidate service objects are determined, the acceptance criterion is accentuated until, finally, the number of hits matching the acceptance criterion is found to be within the desired range.

In a particularly preferred example of embodiment the keywords assigned to a specific node are automatically assigned to the further nodes or service objects classified under it i.e. the keywords are "inherited" upwards or downwards within the data structure.

After an unsuccessful search step - where "unsuccessful" is here understood to mean that either too few or too many candidate nodes and/or candidate service objects were found - the search can then preferably be continued on another level or while including another level of the data structure until the number of candidate nodes and/or candidate service objects is situated within the desired limits.

Since the "inheritance" has ensured that the keywords continuously increase from top to bottom in the data structure and all keywords belonging to the higher categories i.e. to the nodes found higher up in the tree structure can also be found on a lower level, the search is preferably commenced at the bottom of the data structure i.e. on the level of the service objects. If the desired result is not achieved here, the search is continued step by step each time including a next-higher level among the nodes. In this method it is therefore not necessary to accentuate the acceptance criterion itself but the number of hits can simply be reduced by a step-by-step search on various levels until the number of hits is situated within the desired limits and a meaningful menu for the next issue to the user can be generated. This is advantageous in that - different from an accentuation of the acceptance criterion - none of the hits found in a first search step is rejected because this could lead to the fact that just the right hit is rejected. Instead of this a menu is formed from categories of a higher level, so that it is ensured that on the one hand only a small number of categories within the menu is issued, but, on the other hand, the categories still cover as "generic terms" all the categories or services that were found in the preceding search step.

In other words, in this preferred example of embodiment of the dialogue system according to the invention there is provided that the user is led to a point in the data structure which is, on the one hand, closest possible to the bottom layer of the data structure, so that from the start of the further dialogue only few queries are necessary to reach the service object of the service, respectively. On the other hand, the start is found in a level of the data structure that is still high enough for covering all the categories and services determined on the basis of the extracted search words and not unnecessarily reject any hits.

In case there is too small a number of determined candidate nodes and/or candidate service objects, the acceptance criterion can preferably be expanded in a search step. This is particularly advantageous in the example of embodiment of the method mentioned previously in which the keywords are passed on from the upper nodes of the data structure to the nodes situated below them and where the search is started step by step from bottom to top because here on the first search step on the level of the services always the most hits are found and a further search step on a higher level can lead only to a reduction of the number of hits.

When a conventional database search module from an Internet search engine is used, a variation of the acceptance criterion can be achieved simply by changing the proportional hit quote.

In a further example of embodiment that is relatively simple to achieve, the extracted search words are individually compared with the keywords of each individual node and service object for the search, and the number of matches between search words and keywords are counted for the individual nodes and service objects. The acceptance criterion may then be simply a stipulated minimum number of matches between the extracted search words and the keywords. For example, it may be stipulated that all keywords in the keywords of a service object or of a node should be included or at least two search words or at least one search word etc.

Claim 10 describes a further highly advantageous variant of the speech dialogue system according to the invention. It refers to the case where the user after executing a search and an announcement of a menu according to the method according to the invention utilizes a spoken entry which includes further new search words.

An example for this is the case where the user receives the following prompt after the search word "travel": "Would you like to travel by car, by train or by plane? Please make a choice." and the user then answers relatively casually: "Car is OK, I want to be mobile." This line of response of the user includes two potential keywords, that is, the connotations "car" and "mobile". The other words of this sentence are recognized as non-meaningful for the analysis. Accordingly, two new search words, that is to say "car" and "mobile" are extracted from this spoken entry. The speech dialogue system then leads to a new search with the search words "car" and "mobile" and finds, for example, the category "car" (as with the first search) and additionally the category "mobile radio device", which may lead to certain telephone enquiry services or tariff information services. If the result of the first search consisting of the categories "car, train, plane" is intersected with the result of the second search consisting of the categories "car" and "mobile radio", the total result obtained will be the category "car", which is unambiguously the category desired by the user. This category is then preferably outputted to the user.

In so far as the intersection refers to various hits, the user can thus make his choice from these preferred hits. If there is only one intersection element, the preferred issue can be made only for a further verification by the user, for example, by the message "you have selected 'car', is this correct?".

As long as the intersection is empty, the speech dialogue system ignores the previous search result and utilizes only the new search result. An example of this would be if the user replies to the first output of the first search result: "Actually I want to have information about mobile radio tariffs". This reply of the user only contains the search word "mobile" and leads to a search result that contains only the category "mobile radio". The intersection between the first search result "car, train, plane" and the second search result "mobile radio" is empty as a result of this and according to the user's wish only the category "mobile radio" is rightly offered.

These and other aspects of the invention are apparent from and will be elucidated with reference to the embodiments described hereinafter.

In the drawings:

Fig. 1 shows a block diagram of the essential components of a speech dialogue system according to the invention,
Fig. 2 shows a block diagram of a simple graphic example for a data structure in a database of a speech dialogue system according to the invention,
Fig. 3 shows part of a flow chart for a possible order of the method of utilizing the speech dialogue system.

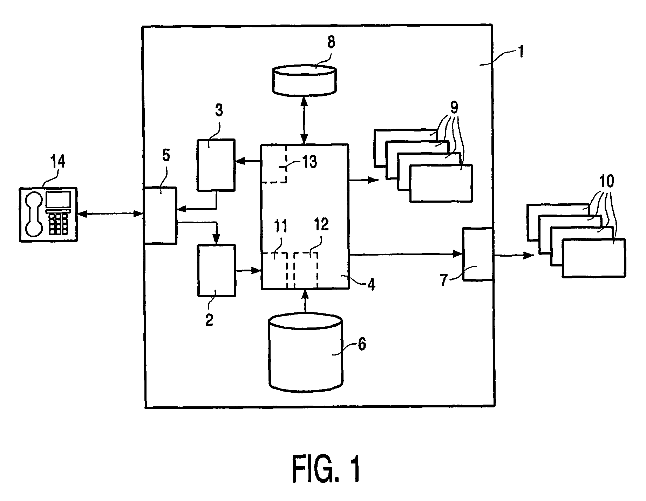

The example of embodiment shown in Fig. 1 is a speech dialogue system 1 which has a network interface 5 via which the speech dialogue system 1 is connected to a public communications network, for example a telephone network, and thus can be reached by a user over a normal telephone 14.

To enable communication with the user in natural speech, the speech dialogue system 1 includes a speech recognition unit 2. This unit receives the user's speech signals coming in via the network interface 5 and performs a speech recognition in which the information contained in the speech signal is converted into data which can be processed by the subsequent parts of the system. On the output side the speech dialogue system 1 includes a speech generation system 3. This may be, for example, a so-called TTS system (text-to-speech system), which generates from incoming computer-readable data a spoken text via an appropriate putting together of phonemes and words. However, it may also be a so-called prompt player which contains stored texts which are called up and accordingly played back to the user. It may also be a system which utilizes a combination of a TTS system and a prompt player. The outgoing speech data are then again switched to the telephone 14 of the user via the network interface 5.

The core of the speech dialogue system 1 is a dialogue control system 4 which together with a database 6 controls the dialogue with the user and which dialogue control system 4 calls up services 9 in the dialogue system 1 or transfers the user via a call transfer unit 7 to an external service 10.

The speech dialogue system 1 shown can in essence be produced in the form of software on a suitable computer or server, respectively. The speech recognition system 2, the speech generation system 3 and the dialogue control system 4 may be pure software modules which are intercoupled in suitable fashion. Only the network interface 5 is to have respective hardware components for connection to the desired network. Since also a call transfer can be effected via hardware i.e. the network interface 5, the call transfer unit 7 may also be - different from that shown in Fig. 1 - a pure software unit which contains only the necessary information for carrying out the call transfer to the various external services and introduces the call transfer in the communication network via the network interface 5.

In addition to the components shown in Fig. 1, the speech dialogue system may also have further components as they are customarily used in speech dialogue systems. As an example is shown here an additional database 8 which contains various information items about individual users which are registered as against the speech dialogue system and which can be identified in case of a call. Such a database may contain particularly information about services preferably used by the users, about a last use of the speech dialogue system by the respective user or the like. The additional information may then be used for the speech recognition for the analysis of search words or in similar manner for the user in order to guide him faster to the desired services. The speech dialogue system may particularly also contain additional components for statistics about the use of the speech dialogue system or individual services or for special users.

The dialogue control system 4 itself comprises in the example of embodiment shown a plurality of suitably combined software modules.

This particularly relates to an analysis module 11 which extracts certain search words from the data received from the speech recognition system 2. This search word extraction takes place on the basis of predefined grammatical and syntactical rules so that not every word in a line spoken by the user is extracted as a search word and particularly the non-meaningful words in a line are ignored. For example, from the line "I would like to have theater information" the terms "theater" and "information" are extracted as search words whereas the words "I would like" have no further meaning for the further processing.

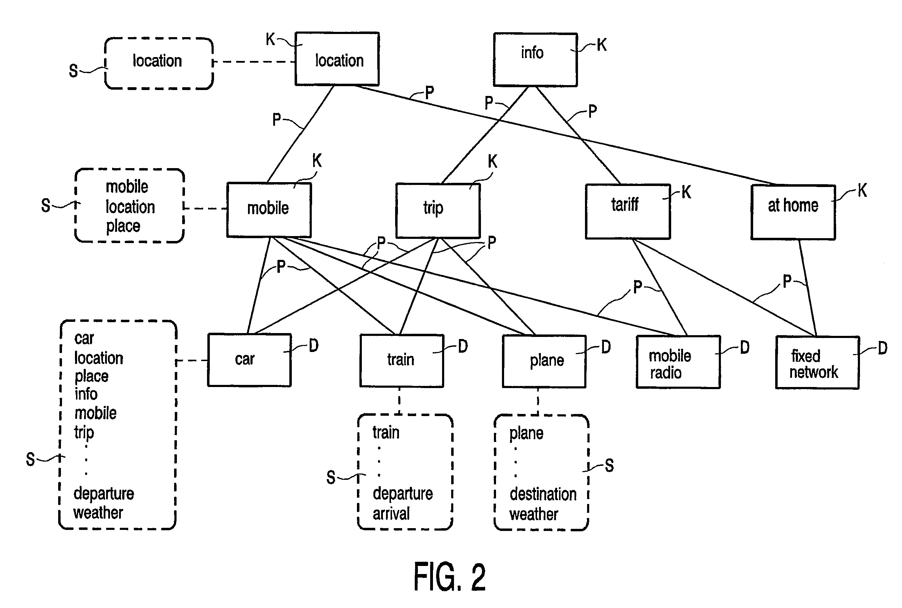

Then a search module 12 of the dialogue control system 4 performs a search for certain services and/or categories in the database 6 on account of the search words. This database contains a data structure DS in the form of a multiple decision tree. An example of this is shown in Fig. 2. The data structure DS here contains a plurality of nodes K which are interconnected via paths P. The nodes K are situated on two levels I and II. On a third level III below the lower node level II there is a level of service objects D.

These service objects D represent the individual services 9, 10. In the example of embodiment shown there are always more complex services for which still further queries within the service are necessary, so that the user reaches the desired information. For example, the service "fixed network" may be normal telephone information to which the user is referred. With the service "train" it is a service of a railway company to which the user is referred once he has selected the service "train". The individual services 9, 10 may here be structured as a speech dialogue system in the manner according to the invention. For example, a telephone inquiry hidden behind the service "fixed network" may have a database having its own tree structure with a plurality of categories and services, a service being understood to mean in the end the issuance of searched information about a certain subscriber, for example, the telephone number or the address.

The nodes K in the data structure DS each represent categories in which the categories or sub-categories or services situated in the level below can be classified or sorted. As Fig. 2 clearly shows, each of the services is sorted at least into a category in the medium level II. A plurality of services may then be sorted into the same category so that, conversely, from one node K of the medium level II a plurality of paths P may lead to different services D. Similarly, the categories of the medium level II are assigned as sub-categories of the categories in the level I.

For clarity Fig. 2 shows only a very simple example of embodiment of a data structure DS according to the invention. In reality such a data structure is far more complex and stretches out over a multitude of levels which have each a multitude of parallel nodes and/or service objects. Besides, not every service or node means needs to be assigned to a category of the next higher level, but one or more levels may also be skipped by a path.

To each of the individual nodes K and service objects D are assigned different keywords S. To these keywords S belong particularly the names of the individual categories or services themselves as they are called in the boxes in Fig. 2. In addition, the individual nodes K and service objects D - the categories and services respectively - may be assigned additional keywords. It is desirable for suitable synonyms of the names of the individual services or categories or other keywords under which the user would naturally search such a service or category or which could be related to the service, to belong to the further keywords. For example, as shown in Fig. 2, to the service "car" could be assigned the keywords "departure" and "weather", to the service "train" the keywords "departure" and "arrival" and to the service object "flight" the keywords "destination" and "weather".

The keywords of one category are "passed on " to the associated categories or services in the next-lower level. This is shown in Fig. 2 by way of example via the chain of the category "location", sub-category "mobile" and service "car". To the category "location" belong the keywords "location" and "place", to the sub-category "mobile" then belong the keywords "mobile", "location" and "place" as well as any further keywords, and the keywords "car", "location", "place", "info", "mobile", "trip" as well as further keywords are combined with the service "car".

The search in this data structure DS is executed in the following example with three levels as follows:

A begin is made with a search step on the bottom level III i.e. on the level III of the service objects D. Based on the covering to search words and keywords S of the individual service objects D, candidate service objects are searched for here which could match the desired service of the user. For the concrete performance of the search there are then various possibilities. On the one hand, a customary software module may be used as is used in an Internet search engine. Such software search modules produce a result that indicates a proportional match for each hit, for example, a 100% hit if all the search words are to be found in the keywords of the respective service object or node. When such a search engine is used, a percentage, for example 70%, may be laid down simply as an acceptance criterion, above which a hit is accepted. If the percentage lies below this stipulated acceptance criterion, the hit is rejected.

If the search leads to a single hit, it may be assumed that it is the service desired. The service is either called up immediately for the user or beforehand the service is announced to be verified by the user.

If no service at all is found, either the user can be requested to enter a new spoken command or the acceptance criterion is lowered to, for example, 50% in the hope that then a service is found.

If, on the other hand, a search produces more than one service, the further procedure of the dialogue depends on how large the number of services found is, or whether the number of respective service objects found is below a predefined maximum number. In the example of embodiment as presented this maximum number is laid down as five. If the number of hits found is lower than this maximum number, a prompt generation unit 13 of the dialogue control system 4 with the aid of the speech output device 3 generates a menu in which the four hits i.e. the four services found are announced to the user. The user can then select one of the services.

At this point it is observed that the selection by the user after the announcement of such a menu can be made not only via a new spoken entry but also by depressing a key of the telephone, for example, by means of a DTMF method. For example for the generation of the prompt a number may be announced prior to the respective hit i.e. the service or category found, and the user can accordingly depress the appropriate key of his digit keypad on the telephone. The speech dialogue system then naturally has to have an additional means for recognizing and processing the DTMF signals.

If the number of hits exceeds the predefined maximum number, a renewed search step is carried out. The search is continued on the next-higher level - in the example shown the search on the medium level II i.e. the level directly above the nodes K assigned to the services. Since various services belong to one category and the keywords are passed on down, the number of categories on this level will be smaller than the number of services on the level III situated below level II. In this way during a search with the same search words the number of hits on this level II is smaller than with the previous search step on the level III situated below level II.

In the example shown in Fig. 2 the number of hits i.e. of the possible candidate nodes is always bound to be less than or equal to four since the level II has only four categories. In reality also this level will have considerably more than four different categories or nodes, so that in many cases also on this level the number of candidate nodes found still exceeds the maximum number. In this case a search is made on the next-higher level until, finally, the number of candidate nodes found or of the possibly suitable categories is lower than the maximum number.

During the search allowance should be made for the fact that not every service or category is assigned to a category of the next-higher level, but one or various levels are skipped by a path. In that case, with a new search step in the next-higher level the candidate service objects or candidate nodes already found in the previous search step, which are not connected to a node of the higher level, should again be included in the search.

If, finally, during a search step only one candidate node is found, the search is aborted because a situation is reached here in which it is no longer possible to further reduce the number of hits. A continuation of the search on a lower level is not very meaningful either, because the search has already been made here and has already led to a result with a number of hits which is higher than the predefined maximum number. This means that all these hits belong to the one candidate node found of the higher level. An example of such a situation is a query for a store of a company where the stores are sorted into various postcode regions depending on their sales regions and the number of sales regions exceeds the number of maximum hits. In a case like that all categories and services belonging to the respective candidate node found last are issued to the user within a speech output menu independently of the respective number.

Since in this case the maximum number is exceeded, the issuance is preferably grouped and provided with a group reference. This group reference is, for example, a number or a name, so that the user can first select a group by indicating the group reference and then supply this group of categories or services once more for the further selection. Alternatively, it is also possible for the speech dialogue system itself to first generate a clarifying question and, on account of the response of the user, then to select either of the two groups to be announced. In the example mentioned, the speech dialogue system could query the user for his residence and then offer only the sales areas of the neighborhood to choose from. If no candidate point is determined during a search step in a higher level, the complete list of categories or services is then issued.

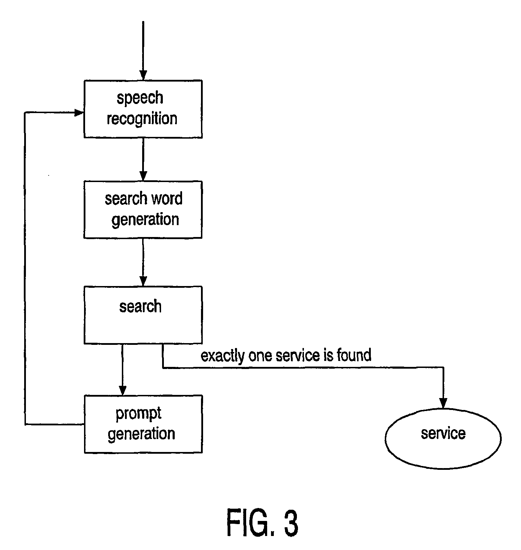

Fig. 3 shows a part of a flow chart which represents the possible pattern of a dialogue when the speech dialogue system 1 is used. After a spoken command has been uttered by the user, there is first speech recognition. Then the search words are extracted from the recognized speech information. Subsequently, on account of these search words, a search is made in accordance with the method described above. If exactly one service is found, the respective service is called up for the user or when this service is a pure issuance of information, this information is given. Otherwise, first a prompt is generated and issued with the aid of which the user is requested to select a category or a service from a number of candidate categories or candidate services. The answer given by the user is then again applied to the speech recognizer and a new search word extraction is caused. The search is then continued with the new search words. This method is proceeded with until, finally, the desired service is found or an explicit abortion of the dialogue takes place, for example, at the user's request.

In the following, an alternative is further described for the use of a commercial Internet search engine or a search module of such a search engine. In this example of embodiment the database is searched once after each search word and for each search word a number of nodes or service objects are determined as a result, whose keywords contain this certain search word. The number of matches of the search words and keywords is used as an acceptance criterion. This is relatively simple because of a suitable formation of intersections and/or unions of sets of the search results.

The narrowest acceptance criterion in this method is laying down that only such hits are accepted for which all search words within the keywords are present in identical form. Those categories or services whose keywords contain all the search words can be determined by a formation of an intersection in accordance with the following rule:

$$\bigcap_{i \in \{1 \ldots n\}} A_i \quad (1)$$

The $A_i$ herein represents the respective search result for the $i^{th}$ search word i.e. the number of categories or services whose keywords contain the $i^{th}$ search word. According to the rule

$$\bigcup_{i \neq j} \left( A_i \cap A_j \right) \quad (2)$$

all the categories or services can be found back which have at least two of the search words among their keywords.

Furthermore, according to the rule

$$\bigcup_{i \in \{1 \ldots n\}} A_i \quad (3)$$

all the categories or services can be determined which have at least one keyword that matches one of the search words.

There are thus three different strict acceptance criterions available. Therefore, first the number of hits according to formula (1) can be determined in one search step. When the number of hits is too low, a calculation according to formula (2), and finally according to formula (3) is made. Finally, if no hit according to the third acceptance criterion is found, the user is requested to enter a new search query.

The formulae (1) to (3) will be clarified once again in the following with respect to a concrete example. This has reference to Fig. 2.

It is assumed that the search words "departure" and "weather" are assigned to the service "car", the search words "departure" and "arrival" to the service "train" and the search words "destination" and "weather" to the service "flight".

If, furthermore, it is assumed that from the speech entry of the user the search word "departure" was determined, the search result for this one search word $A_1$ = {"car", "train"}. Since only one search word is available and thus only one number of bits $A_1$ exists, nothing changes as a result of the formation of the intersection according to formula (1).

It is different if, additionally, a search is made for a second search word here, for example, the search word "weather". The search result for the second search word "weather" will then be $A_2$ = {"flight", "car"}. The formation of the intersection of $A_1$ and $A_2$ leads to

$$A_1 \cap A_2 = \{\text{"Auto"}\} \qquad (4)$$

i.e. only the service "car" contains both the search word "departure" and the search word "weather" as keywords. In this way exactly one service is found that satisfies the strictest acceptance criterion and the user is transferred to this service.

It is another case if still a third keyword, for example the keyword "arrival" is added. In that case the search result $A_1$ = {"car", "train"} is obtained for the search word "departure", for the search word "weather" the search result $A_2$ = {"car", "flight"} and for the third search word "arrival" the search result $A_3$ = {"train"}. If the whole search result is determined according to formula (1), an empty set will be obtained because none of the services contains all the search words within the keywords. If the acceptance criterion is reduced and the calculation of the total result is made according to formula (2), the following is obtained

$$A_1 \cap A_2 = \{\text{"Auto"}\} \qquad A_1 \cap A_3 = \{\text{"Bahn"}\} \qquad A_2 \cap A_3 = \varnothing$$

$$\Rightarrow (A_1 \cap A_2) \cup (A_1 \cap A_3) \cup (A_2 \cap A_3) = \{\text{"Auto", "Bahn"}\} \qquad (5)$$

Subsequently, the services "car" and "train" are obtained as total result because the two contain two of the search words within their keyword sets.

If, on the other hand, the search words "destination" and "arrival" are selected, the search result $A_1$ = {"flight"} is obtained for the first search word and the result $A_2$ = {"train"} for the second search word "arrival". If the strictest acceptance criterion is selected and a calculation of the total result is made according to formula (1), an empty set is obtained. Similarly, a calculation according to formula (2) leads to an empty set because none of the hits found contains the two search words in the keyword lists. Only a calculation of the total result according to formula (3) will lead to the fact that all hits found, that is the services "train" and "plane" are accepted as candidate services or candidate service objects.

It is pointed out once more that in addition to the concretely described search method or the use of a commercial search module, also further search algorithms may be used to carry out the method according to the invention. Similarly, the method may be modified at further points without essentially changing the invention. For example, at arbitrary instants further prompts may be issued for an additional verification of intermediate results.

The system may also be structured as a so-called barge-in dialogue system in which the user can barge in any time during the issuance of a prompt and this response is accepted by the speech dialogue system and processed and the further issuance of the prompt is interrupted. Similarly, a search can be aborted any time at the user's request or when a predefined abortion criterion occurs.

Furthermore, it is pointed out once more that the example of embodiment shown in Fig. 1 is only a strongly simplified representation of the speech dialogue system and the speech dialogue system according to the invention may also be produced in modified form. More particularly it is possible for the individual software modules to be assigned to various computers within a network instead of to a single computer, while particularly the obvious thing to do is to evacuate highly computer-intensive functions such as speech recognition to other computers. Furthermore it is possible for the speech dialogue system to alternatively or additionally for the telephone connection to have its own user interface with a microphone and a loudspeaker. Also rendering speech data available over the data network - so-called voice-over-IP - is possible. With the aid of the invention it is possible to build up a voice portal which the user can operate considerably more intuitively and more flexibly than voice portals known so far. Furthermore, such a speech dialogue system is capable of managing large databases, for example, for managing directory systems or so-called yellow page applications. In addition to this the users can formulate and refine their search request in a relatively simple and efficient method. In addition, this avoids an issuance of long, unwieldy lists which are no longer distinct for the user.

**Claims**

1. A method of operating a speech dialogue system (1) which communicates with a user while use is made of a speech recognition device (2) and a speech output device (3), various services (9, 10) being available to the user in the speech dialogue system (1) or via the speech dialogue system (1) and being selectable by the user in a dialogue held with the speech dialogue system (1), and then for controlling the dialogue for the selection of a service (9, 10) by the user, a database (6) is used having a hierarchical data structure and a plurality of nodes (K) and a plurality of paths (P) for connecting the nodes (K) mutually and for connecting nodes (K) to service objects (D) which are arranged at one end of each path (P) in the data structure, the service objects (D) representing the services that are available (9, 10) and the nodes (K) representing the categories in which again other categories and/or services are classified which are represented by further nodes (K) or service objects (D) arranged in the hierarchical data structure on a level below the respective node (K), **characterized in that** a plurality of paths (P) within the data structure leads at least to part of the service objects (D) and/or nodes (K) and to each node (K) and each service object (D) one or more keywords (S) are assigned, and when a spoken entry of the user is received search words are extracted from this spoken entry and, on the basis of the search words, a number of candidate nodes (K) and/or candidate service objects (D) are sought whose assigned keywords (S) match the search words according to a predefined acceptance criterion, a search being made in various search steps until after a search step the number of candidate nodes (K) and/or candidate service objects (D) found is situated above a predefined minimum number and below a predefined maximum number and then by means of the speech output device (3) a speech output menu is produced to announce to the user the categories and/or the services (9, 10) represented by the candidate nodes (K) and/or candidate service objects (D) found for the user to select a certain category or a certain service (9, 10).

2. A method as claimed in claim 1, **characterized in that** the keywords assigned to a certain node are automatically also assigned to the further nodes and/or service objects classified thereunder.

3. A method as claimed in claim 1 or 2, **characterized in that** after an unsuccessful search step the search on or including another level of the data structure is continued until the number of candidate nodes (K) and/or candidate service objects (D) found is above the predefined minimum number and below the predefined maximum number.

4. A method as claimed in claim 3, **characterized in that** the search in the data structure is started on the level of the service objects (D) and then the search is continued step by step on or including a next-higher level below the nodes (K).

5. A method as claimed in any one of the claims 1 to 4, **characterized in that** the predefined minimum number of candidate nodes (K) and/or candidate service objects (D) equals one and when only one candidate service object (D) is determined in a search step, the service (9, 10) represented by this candidate service object (D) is called up.

6. A method as claimed in any one of the claims 1 to 5, **characterized in that** the predefined minimum number of candidate nodes (K) and/or candidate service objects (D) equals one and when only one candidate node (K) is determined in a search step, the search is aborted and, independently of the respective number, all categories or services (9, 10) are presented to the user in a speech output menu which categories and services are represented by the nodes (K) and/or service objects (D) which are situated in the data structure below the respective candidate node (K) and are connected therewith via a path (P).

7. A method as claimed in claim 6, **characterized in that** the categories or services are issued in groups with a group reference.

8. A method as claimed in any one of the claims 1 to 7, **characterized in that** the acceptance criterion is a minimum number of matches between the extracted search words and the keywords assigned to a node or service object.

9. A method as claimed in any one of the claims 1 to 8, **characterized in that** within a search step when the number of candidate nodes and/or candidate service objects is too small, the acceptance criterion is broadened.

10. A method as claimed in any one of the claims 1 to 9, **characterized in that** in so far as the speech dialogue system after a first search and an announcement to the user of the categories and/or services representing the candidate nodes and/or candidate service objects found, receives a new spoken entry from the user which contains new search words that can be extracted by the speech dialogue system, determines in a second search a new number of candidate nodes and/or candidate service objects on the basis of the new search words, and forms the intersection of the candidate nodes and/or candidate service objects found in the first search and of the candidate nodes and/or candidate service objects found in the second search, and preferably announces to the user those categories and/or services that are represented by the candidate nodes and/or candidate service objects found in the intersection.

**11.** An automatic speech dialogue system (1)

- comprising a speech recognition device (2) and a speech output device (3) for communication with a user
- comprising a plurality of services (9) that can be selected by the user in the speech dialogue system (1) and/or means (7) for transferring the user via the speech dialogue system (1) to services (10) that can be selected by the user,
- comprising a dialogue control unit (4) for controlling the dialogue for the selection of a service (9, 10) by the user
- and comprising a database (6) having a hierarchical data structure with a plurality of nodes (K) and a plurality of paths (P) to interconnect the nodes (K) and to connect the nodes (K) to service objects (D) which are arranged at a respective end of a path (P) in the data structure, while the service objects (D) represent the services (9, 10) which are available and the nodes (K) represent the respective categories in which other categories and/or services are classified which are represented by further nodes (K) and/or service objects (D) arranged on a level below the respective node (K) in the hierarchical data structure,

**characterized in that** a plurality of different paths (P) lead at least to part of the service objects (D) and/or nodes (K) in the data structure, **in that** one or more keywords (S) are assigned to each node (K) and each service object (D) of the database (6) and **in that** the speech dialogue system (1) comprises:

- an analysis unit (11) for extracting search words from a spoken entry received from the user,
- a search unit (12) for searching on the basis of the search words a number of candidate nodes (K) and/or candidate service objects (D) within the database (6), whose assigned keywords (S) match the search words according to a predefined acceptance criterion, the search unit (12) having such a structure that it carries out a search in various search steps until after a search step the number of candidate nodes (K) and/or candidate service objects (D) found is situated above a predefined minimum number and below a predefined maximum number,
- and a prompt generation unit (13) for generating after a successful search step a speech output menu to announce to the user the categories and/or services (9, 10) represented by the candidate nodes (K) and/or candidate service objects (D) found for him to select a certain category or a certain service (9, 10) by means of a speech output device (3).

**12.** A computer program comprising computer code means for carrying out all the steps of a method as claimed in any one of the claims 1 to 10 when the program is run on a computer of a speech dialogue system.

**Patentansprüche**

**1.** Verfahren zum Betrieb eines Sprach-Dialogsystems (1), welches mit einem Nutzer unter Verwendung einer Spracherkennungseinrichtung (2) und einer Sprachausgabeeinrichtung (3) kommuniziert, wobei dem Nutzer verschiedene Dienste (9, 10) innerhalb des Sprach-Dialogsystems (1) oder durch Vermittlung des Sprach-Dialogsystems (1) zur Verfügung stehen und vom Nutzer innerhalb eines mit dem Sprach-Dialogsystem (1) geführten Dialogs auswählbar sind, und dabei zur Steuerung des Dialogs zum Auswählen eines Dienstes (9, 10) durch den Nutzer eine Datenbank (6) verwendet wird, die eine hierarchische Datenstruktur mit einer Vielzahl von Knotenpunkten (K) und einer Vielzahl von Pfaden (P) zur Verbindung der Knotenpunkte (K) untereinander und zur Verbindung von Knotenpunkten (K) mit Dienstobjekten (D) aufweist, welche jeweils an einem Ende eines Pfads (P) in der Datenstruktur angeordnet sind, wobei die Dienstobjekte (D) die zur Verfügung stehen Dienste (9, 10) repräsentieren und die Knotenpunkte (K) die Kategorien repräsentieren, in welche wiederum andere Kategorien und/oder Dienste, die durch innerhalb der hierarchischen Datenstruktur auf einer Ebene unter dem jeweiligen Knotenpunkt (K) angeordnete weitere Knotenpunkte (K) oder Dienstobjekte (D) repräsentiert werden, klassifiziert sind,
**dadurch gekennzeichnet,**
**dass** eine Vielzahl von Pfaden (P) zumindest zu einem Teil der Dienstobjekte (D) und/oder Knotenpunkte (K) innerhalb der Datenstruktur führt, und jedem Knotenpunkt (K) und jedem Dienstobjekt (D) ein oder mehrere Schlüsselwörter (S) zugeordnet sind und bei einem Empfang einer Spracheingabe des Nutzers aus dieser Spracheingabe Suchwörter extrahiert werden und auf Basis der Suchwörter eine Anzahl von Kandidaten-Knotenpunkten (K) und/oder Kandidaten-Dienstobjekten (D) gesucht wird, deren zugeordnete Schlüsselwörter (S) gemäß einem vorgegebenen Akzeptanzkriterium mit den Suchwörtern übereinstimmen, wobei eine Suche in mehreren Suchschritten durchgeführt wird, bis nach einem Suchschritt die Anzahl der gefundenen Kandidaten-Knotenpunkte (K) und/oder Kandidaten-Dienstobjekte (D) oberhalb einer vorgegebenen Minimalanzahl und unterhalb einer vorgegebenen Maximalanzahl liegt, und dann mittels der Sprachausgabeeinrichtung (3) ein Sprachausgabe-Menü zur Ansage der durch die gefundenen Kandidaten-Knotenpunkte (K) und/oder Kandidaten-Dienstobjekte (D) repräsentierten Kategorien und/oder Dienste (9, 10) an den Nutzer zur Auswahl einer bestimmten Kategorie oder eines bestimmten Dienstes (9, 10) generiert wird.

2. Verfahren nach Anspruch 1, **dadurch gekennzeichnet, dass** die einem bestimmten Knotenpunkt zugeordneten Schlüsselwörter automatisch auch den darunter klassifizierten weiteren Knotenpunkten und/oder Dienstobjekten zugeordnet werden.

3. Verfahren nach Anspruch 1 oder 2, **dadurch gekennzeichnet, dass** nach einem erfolglosen Suchschritt die Suche auf oder unter Einbeziehung einer anderen Ebene der Datenstruktur fortgeführt wird, bis die Anzahl der gefundenen Kandidaten-Knotenpunkte (K) und/oder Kandidaten-Dienstobjekte (D) oberhalb der vorgegebenen Minimalanzahl und unterhalb der vorgegebenen Maximalanzahl liegt.

4. Verfahren nach Anspruch 3, **dadurch gekennzeichnet, dass** mit der Suche innerhalb der Datenstruktur auf der Ebene der Dienstobjekte (D) begonnen wird und dann die Suche schrittweise auf oder unter Einbeziehung einer nächsthöheren Ebene unter den Knotenpunkten (K) weitergeführt wird.

5. Verfahren nach einem der Ansprüche 1 bis 4, **dadurch gekennzeichnet, dass** die vorgegebene Minimalanzahl der Kandidaten-Knotenpunkte (K) und/oder Kandidaten-Dienstobjekte (D) gleich eins ist und bei Ermittlung nur eines Kandidaten-Dienstobjekts (D) in einem Suchschritt der durch dieses Kandidaten-Dienstobjekt (D) repräsentierte Dienst (9, 10) aufgerufen wird.

6. Verfahren nach einem der Ansprüche 1 bis 5, **dadurch gekennzeichnet, dass** die vorgegebene Minimalanzahl der Kandidaten-Knotenpunkte (K) und/oder Kandidaten-Dienstobjekte (D) gleich eins ist und bei Ermittlung nur eines Kandidaten-Knotenpunkts (K) in einem Suchschritt die Suche abgebrochen wird und unabhängig von der jeweiligen Anzahl in einem Sprachausgabe-Menü alle Kategorien oder Dienste (9,10) an den Nutzer ausgegeben werden, die durch die Knotenpunkte (K) und/oder Dienstobjekte (D) repräsentiert werden, die sich in der Datenstruktur unter dem betreffenden Kandidaten-Knotenpunkt (K) befinden und mit diesem über einen Pfad (P) verbunden sind.

7. Verfahren nach Anspruch 6, **dadurch gekennzeichnet, dass** die Kategorien oder Dienste gruppiert unter Angabe einer Gruppenbezeichnung ausgegeben werden.

8. Verfahren einem der Ansprüche 1 bis 7, **dadurch gekennzeichnet, dass** das Akzeptanzkriterium eine Mindestanzahl von Übereinstimmungen zwischen den extrahierten Suchwörtern und den einem Knotenpunkt oder Dienstobjekt zugeordneten Schlüsselwörtern umfasst.

9. Verfahren nach einem der Ansprüche 1 bis 8, **dadurch gekennzeichnet, dass** innerhalb eines Suchschritts bei einer zu geringen Anzahl von Kandidaten-Knotenpunkten und/oder Kandidaten-Dienstobjekten das Akzeptanzkriterium erweitert wird.

10. Verfahren nach einem der Ansprüche 1 bis 9, **dadurch gekennzeichnet, dass**, sofern das Sprach-Dialogsystem nach einer ersten Suche und einer Ansage der durch die gefundenenen Kandidaten-Knotenpunkte und/oder Kandidaten-Dienstobjekte repräsentierten Kategorien und/oder Dienste an den Nutzer eine erneute Spracheingabe des Nutzer empfängt, welche vom Sprach-Dialogsystem extrahierbare neue Suchwörter enthält, auf Basis der neuen Suchwörter in einer zweiten Suche eine neue Anzahl von Kandidaten-Knotenpunkten und/oder Kandidaten-Dienstobjekten ermittelt, und die Schnittmenge der bei der ersten Suche gefundenen Kandidaten-Knotenpunkte und/oder Kandidaten-Dienstobjekte und der bei der zweiten Suche gefundenen Kandidaten-Knotenpunkte und/oder Kandidaten-Dienstobjekte bildet, und die Kategorien und/oder Dienste, welche durch die in der Schnittmenge befindlichen Kandidaten-Knotenpunkte und/oder Kandidaten-Dienstobjekte repräsentiert werden, bevorzugt dem Nutzer ansagt.

11. Automatisches Sprach-Dialogsystem (1)

- mit einer Spracherkennungseinrichtung (2) und einer Sprachausgabeeinrichtung (3) zur Kommunikation mit einem Nutzer

- mit einer Vielzahl von vom Nutzer auswählbaren Diensten (9) innerhalb des Sprach-Dialogsystems (1) und/ oder Mitteln (7) zur Vermittlung des Nutzers an vom Nutzer auswählbare Dienste (10) mittels des Sprach-Dialogsystems (1),

- mit einer Dialogkontrolleinheit (4) zur Steuerung des Dialogs zum Auswählen eines Dienstes (9, 10) durch den Nutzer

- und mit einer Datenbank (6) mit einer hierarchischen Datenstruktur mit einer Vielzahl von Knotenpunkten (K) und einer Vielzahl von Pfaden (P) zur Verbindung der Knotenpunkte (K) untereinander und zur Verbindung von Knotenpunkten (K) mit Dienstobjekten (D), welche jeweils an einem Ende eines Pfads (P) in der Datenstruktur angeordnet sind, wobei die Dienstobjekte (D) die zur Verfügung stehen Dienste (9, 10) repräsentieren und die Knotenpunkte (K) die jeweiligen Kategorien repräsentieren, in die andere Kategorien und/oder Dienste, die durch innerhalb der hierarchischen Datenstruktur auf einer Ebene unter dem jeweiligen Knotenpunkt (K) angeordnete weitere Knotenpunkte (K) und/oder Dienstobjekte (D) repräsentiert werden, klassifiziert sind,

**dadurch gekennzeichnet, dass** eine Vielzahl von verschiedenen Pfaden (P) zumindest zu einem Teil der Dienstobjekte (D) und/oder Knotenpunkte (K) innerhalb der Datenstruktur führt, dass jedem Knotenpunkt (K) und jedem Dienstobjekt (D) der Datenbank (6) ein oder mehrere Schlüsselwörter (S) zugeordnet sind und dass das Sprach-Dialogsystem (1) Folgendes umfasst

- eine Analyseeinheit (11), um aus einer empfangenen Spracheingabe des Nutzers Suchwörter zu extrahieren,
- eine Sucheinheit (12), um auf Basis der Suchwörter eine Anzahl von Kandidaten-Knotenpunkten (K) und/oder Kandidaten-Dienstobjekten (D) innerhalb der Datenbank (6) zu suchen, deren zugeordnete Schlüsselwörter (S) gemäß einem vorgegeben Akzeptanzkriterium mit den Suchwörtern übereinstimmen, wobei die Sucheinheit (12) derart aufgebaut ist, dass sie eine Suche in mehreren Suchschritten durchführt, bis nach einem Suchschritt die Anzahl der ermittelten Kandidaten-Knotenpunkte (K) und/oder Kandidaten-Dienstobjekte (D) oberhalb einer vorgegebenen Minimalanzahl und unterhalb einer vorgegebenen Maximalanzahl liegt,
- und eine Promptgenerierungseinheit (13), um nach einem erfolgreichen Suchschritt ein Sprachausgabe-Menü zu generieren, um die durch die gefundenen Kandidaten-Knotenpunkte (K) und/oder Kandidaten-Dienstobjekte (D) repräsentierten Kategorien und/oder Dienste (9, 10) dem Nutzer zur Auswahl einer bestimmten Kategorie oder eines bestimmten Dienstes (9, 10) mittels der Sprachausgabeeinrichtung (3) anzusagen.

**12.** Computerprogramm mit Computercode-Mitteln, um alle Schritte eines Verfahrens nach einem der Ansprüche 1 bis 10 auszuführen, wenn das Programm auf einem Computer eines Sprach-Dialogsystems ausgeführt wird.

**Revendications**

**1.** Procédé pour faire fonctionner un système de dialogue vocal (1), lequel système communique avec un utilisateur en recourant à un dispositif de reconnaissance vocale (2) et à un dispositif de sortie vocale (3), divers services (9, 10) étant mis à la disposition de l'utilisateur dans le système de dialogue vocal (1) ou par le biais du système de dialogue vocal (1) et pouvant être sélectionnés par l'utilisateur au cours d'un dialogue engagé avec le système de dialogue vocal (1), et dans lequel, pour commander le dialogue en vue de la sélection d'un service (9, 10) par l'utilisateur, une base de données (6) est ensuite utilisée, laquelle comprend une structure de données hiérarchique, une pluralité de noeuds (K), ainsi qu'une pluralité de chemins (P) destinés à relier les noeuds (K) les uns aux autres et à relier les noeuds (K) à des objets de service (D) qui sont agencés sur une extrémité de chaque chemin (P) dans la structure de données, les objets de service (D) représentant les services (9, 10) qui sont disponibles et les noeuds (K) représentant les catégories au sein desquelles d'autres catégories et/ou services sont encore classés, lesquels sont représentés par les noeuds (K) ou objets de service (D) supplémentaires agencés dans la structure de données hiérarchique à un niveau se trouvant au-dessous du noeud respectif (K), **caractérisé en ce qu'**une pluralité de chemins (P) à l'intérieur de la structure de données conduit au moins à une partie des objets de service (D) et/ou noeuds (K), et **en ce qu'**un ou plusieurs mots clés (S) sont attribués à chaque noeud (K) et à chaque objet de service (D), et suite à la réception d'une entrée orale de l'utilisateur, des mots de recherche sont extraits de cette entrée orale et, sur la base des mots de recherche, il est recherché un certain nombre de noeuds candidats (K) et/ou de d'objets de service candidats (D) dont les mots clés attribués (S) correspondent aux mots de recherche en fonction d'un critère d'acceptation prédéfini, une recherche étant exécutée au cours de diverses étapes de recherche jusqu'à ce que, après une étape de recherche, le nombre de noeuds candidats (K) et/ou d'objets de service candidats trouvés (D) soit supérieur à un nombre minimal prédéfini et inférieur à un nombre maximal prédéfini, puis au moyen du dispositif de sortie vocale (3), un menu de sortie vocale est généré afin d'annoncer à l'utilisateur les catégories et/ou les services (9,10) représentés par les noeuds candidats (K) et/ou les objets de service candidats (D) trouvés afin que l'utilisateur sélectionne une certaine catégorie ou un certain service (9, 10).

2. Procédé suivant la revendication 1, **caractérisé en ce que** les mots clés attribués à un certain noeud sont automatiquement également attribués aux noeuds et/ou objets de service supplémentaires classés au-dessous de celui-ci.

3. Procédé suivant la revendication 1 ou 2, **caractérisé en ce qu'**après une étape de recherche ayant réussi, la recherche à un autre niveau de la structure de données, ou la recherche incluant celui-ci se poursuit jusqu'à ce que le nombre de noeuds candidats (K) et/ou d'objets de service candidats (D) trouvés soit supérieur au nombre minimal prédéfini et inférieur au nombre maximal prédéfini.

4. Procédé suivant la revendication 3, **caractérisé en ce que** la recherche dans la structure de donnés est démarrée au niveau des objets de service (D), et **en ce que** la recherche se poursuit alors étape par étape à un niveau supérieur suivant au-dessous des noeuds (K), ou en incluant celui-ci.

5. Procédé suivant l'une quelconque des revendications 1 à 4, **caractérisé en ce que** le nombre minimal prédéfini de noeuds candidats (K) et/ou d'objets de service candidats (D) est égal à un, et lorsqu'un seul objet de service candidat (D) est déterminé au cours d'une étape de recherche, le service (9,10) représenté par cet objet de service candidat (D) est appelé.

6. Procédé suivant l'une quelconque des revendications 1 à 5, **caractérisé en ce que** le nombre minimal prédéfini de noeuds candidats (K) et/ou d'objets de service candidats (D) est égal à un, et lorsqu'un seul noeud candidat (K) est déterminé au cours d'une étape de recherche, la recherche est suspendue et, indépendamment du nombre respectif, toutes les catégories ou services (9, 10) sont présentés à l'utilisateur dans un menu de sortie vocale, lesquels catégories ou services sont représentés par les noeuds (K) et/ou objets de service (D) qui se trouvent dans la structure de données au-dessous du noeud candidat respectif (K) et qui sont reliés à celui-ci par le biais d'un chemin (P).

7. Procédé suivant la revendication 6, **caractérisé en ce que** les catégories ou services sont émis dans des groupes avec une référence de groupe.

8. Procédé suivant l'une quelconque des revendications 1 à 7, **caractérisé en ce que** le critère d'acceptation est un nombre minimal de concordances entre les mots de recherche extraits et les mots clés attribués à un noeud ou objet de service.

9. Procédé suivant l'une quelconque des revendications 1 à 8, **caractérisé en ce qu'**au cours d'une étape de recherche, lorsque le nombre de noeuds candidats et/ou d'objets de service candidats est trop faible, le critère d'acceptation est élargi.

10. Procédé suivant l'une quelconque des revendications 1 à 9, **caractérisé en ce que**, après une première recherche et une annonce à l'utilisateur des catégories et/ou services représentant les noeuds candidats et/ou objets de service candidats trouvés, si le système de dialogue vocal reçoit une nouvelle entrée orale de l'utilisateur, laquelle contient de nouveaux mots de recherche pouvant être extraits par le système de dialogue vocal, celui-ci détermine lors d'une seconde recherche un nouveau nombre de noeuds candidats et/ou d'objets de service candidats sur la base des nouveaux mots de recherche, et forme l'intersection des noeuds candidats et/ou objets de service candidats trouvés lors de la première recherche et des noeuds candidats et/ou objets de service candidats trouvés lors de la seconde recherche, et annonce de préférence à l'utilisateur les catégories et/ou services qui sont représentés par les noeuds candidats et/ou objets de service candidats trouvés dans l'intersection.

11. Système de dialogue vocal automatique comprenant :

   - un dispositif de reconnaissance vocale (2) et un dispositif de sortie vocale (3) destinés à la communication avec un utilisateur;
   - une pluralité de services (9) pouvant être sélectionnés par l'utilisateur dans le système de dialogue vocal (1) et/ou des moyens (7) destinés à transférer l'utilisateur par le biais du système de dialogue vocal (1) vers les services (10) pouvant être sélectionnés par l'utilisateur;

- une unité de commande de dialogue (4) destinée à commander le dialogue pour la sélection d'un service (9, 10) par l'utilisateur ;
- une base de données (6) reposant sur une structure de données hiérarchique comportant une pluralité de noeuds (K) et une pluralité de chemins (P) afin de relier les noeuds (K) les uns aux autres et de relier les noeuds à des objets de service (D), lesquels sont agencés sur une extrémité respective d'un chemin (P) dans la structure de données, les objets de service (D) représentant les services (9, 10) qui sont disponibles et les noeuds (K) représentant les catégories respectives au sein desquelles d'autres catégories et/ou services sont classés, lesquels sont représentés par les noeuds (K) ou objets de service (D) supplémentaires agencés à un niveau se trouvant au-dessous du noeud respectif (K) dans la structure de données hiérarchique,

**caractérisé en ce qu'**une pluralité de chemins différents (P) conduit au moins à une partie des objets de service (D) et/ou noeuds (K) dans la structure de données, et **en ce qu'**un ou plusieurs mots clés (S) sont attribués à chaque noeud (K) et à chaque objet de service (D) de la base de données (6), et **en ce que** le système de dialogue vocal (1) comprend :

- une unité d'analyse (11) destinée à extraire des mots de recherche d'une entrée orale reçue de l'utilisateur;
- une unité de recherche (12) destinée à rechercher, sur la base des mots de recherche, un certain nombre de noeuds candidats (K) et/ou d'objets de service candidats (D) dans la base de données (6), dont les mots clés attribués (S) correspondent aux mots de recherche en fonction d'un critère d'acceptation prédéfini, l'unité de recherche (12) présentant une structure telle qu'elle exécute une recherche au cours de diverses étapes de recherche jusqu'à ce que, après une étape de recherche, le nombre de noeuds candidats (K) et/ou d'objets de service candidats (D) trouvés soit supérieur à un nombre minimal prédéfini et inférieur à un nombre maximal prédéfini, et
- une unité de génération d'invite (13) destinée à générer, après une étape de recherche ayant réussi, un menu de sortie vocale afin d'annoncer à l'utilisateur les catégories et/ou services (9, 10) représentés par les noeuds candidats (K) et/ou les objets de service candidats (D) trouvés pour lui, et que celui-ci sélectionne une certaine catégorie ou un certain service (9, 10) au moyen du dispositif de sortie vocale (3).

12. Programme informatique comprenant des moyens de codage informatiques destinés à exécuter toutes les étapes d'un procédé suivant l'une quelconque des revendications 1 à 10 lorsque le programme est exécuté sur un ordinateur d'un système de dialogue vocal.

FIG. 1

**FIG. 2**

FIG. 3

**EP 1 485 908 B1**

## REFERENCES CITED IN THE DESCRIPTION

### Patent documents cited in the description

• EP 0907130 A2